# EUROPEAN PATENT APPLICATION

(11) **EP 4 617 479 A1**
(43) Date of publication of application: **17.09.2025**
(21) Application number: 25163411.9
(22) Date of filing: 13.03.2025
(51) Int. Cl.: F01P 5/10, B60H 1/00, F01P 3/20, F01P 7/00

(54) **MODULAR THERMAL MANAGEMENT SYSTEM**

(30) Priority: 15.03.2024 US 202463565929 P
(71) Applicant: Cooper-Standard Automotive Inc., Northville, MI 48168 (US)
(72) Inventor: VERAZA, Christian A., Northville, 48168 (US); CARDWELL, Brian J., Northville, 48168 (US)
(74) Representative: Taylor, Gail

(57) **Abstract**

A system for circulating coolant comprises a fluid transfer manifold having at least a first inlet port and one or more fluid ports. The fluid ports are connected to one or more coolant circuits. A fluid pump connected to a heat generating component and to the first inlet port circulates the coolant in the coolant circuits. A valve mechanism attached to the fluid transfer mechanism is operable to fluidically connect the first inlet port to one or more of the fluid ports and circulate coolant in the coolant circuits.

## Description

### CROSS-REFERENCE TO RELATED APPLICATION AND PRIORITY CLAIM

This application claims priority under 35 U.S.C. § 119(e) to U.S. Provisional Patent Application No. 63/565,929 filed on March 15, 2024. This provisional application is hereby incorporated by reference in its entirety.

### TECHNICAL FIELD

The field is generally related to a thermal management system comprised of fluid pumps and valves that can transfer coolant through coolant circuits to heat generating and absorbing components.

### BACKGROUND

Pumps are known and commonly used to move fluids such as coolant in a vehicle. One example is cooling systems with water pumps, which are used for the cooling of different components of the vehicle. Valves are used to ensure the distribution of the coolant throughout the coolant system. The valves each require an actuator with electrical control mounted on a structure or component of the vehicle, which results in high component costs.

In electrical or hybrid vehicles, more than one coolant circuit may be employed to cool heat generating components such as the drive train and battery and to modulate the temperature of the driver cabin. Each circuit requires a pump and a valve to direct flow through the appropriate circuit.

It is an object of the present disclosure to employ a modular thermal management system that can transfer coolant fluid through multiple coolant circuits using a minimal set of components.

### SUMMARY

This disclosure relates to a modular thermal management system that can transfer coolant fluid through multiple coolant circuits.

In a first embodiment, a system for circulating coolant is disclosed comprising a fluid transfer manifold having at least a first inlet port and one or more fluid ports. The fluid ports are connected to one or more coolant circuits. A fluid pump is connected to a heat generating component and to the first inlet port. A valve mechanism attached to the fluid transfer manifold is operable to connect the first inlet port to one or more of the fluid ports and circulate coolant from the heat generating component to the one more coolant circuits.

In a second embodiment, a modular thermal management system is disclosed comprising a fluid transfer manifold having a first and a second inlet port and one or more fluid ports fluidically connected to one or more coolant circuits. A first fluid pump is fluidically connected to a first heat generating component and to the fluid transfer manifold first inlet port. The first fluid pump circulates coolant in the coolant circuits. A second fluid pump is fluidically connected to a second heat generating component and to the fluid transfer manifold second inlet port. The second fluid pump circulates coolant in the coolant circuits. The system further includes a valve mechanism operable to fluidically connect the first inlet port to one or more of the fluid ports to circulate coolant to the one or more coolant circuits. The valve mechanism is further operable to fluidically connect the second inlet to one or more of the fluid ports to circulate coolant to the one or more coolant circuits from the second heat generating component.

In a third embodiment, a modular thermal management system is disclosed that comprises a first coolant circuit comprising a heat generating component and a first heat absorbing component. A second coolant circuit comprises at least a second heat absorbing component. A first fluid pump having an inlet is connected to the first coolant circuit and to the heat generating component. The first fluid pump includes a first and a second outlet and an integrated valve that is switchable into a first position that fluidically connects the first outlet to the first heat absorbing component. The system further includes a fluid transfer manifold having one or more fluid ports connected to the second coolant circuit and a first inlet port fluidically connected to the first fluid pump second outlet. The fluid transfer manifold is fluidically connected to the heat generating component of the first coolant loop when the integrated valve is switched into a second position. A valve mechanism attached to the fluid transfer manifold is switchable to fluidically connect the fluid transfer manifold inlet port to one or more of the fluid ports and to fluidically connect the second heat absorbing component to the heat generating component.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIG. 1 diagrammatically illustrates a fluid management system for the transfer of coolant to heat generating and absorbing components;
FIG. 2 illustrates a perspective view of the modular thermal management system of the present disclosure;
FIG. 3 illustrates a top view of the modular thermal management system of the of the present disclosure;
FIG. 4 illustrates a perspective view of the fluid transfer manifold and manifold actuator sub-assembly assembly of the present disclosure;
FIG. 5 illustrates a perspective cross-sectional view of the fluid transfer manifold and the manifold actuator sub-assembly of FIG. 4;
FIG. 6 illustrates a perspective cross-sectional view of the modular thermal management system of FIG. 2;
FIG. 7 illustrates a perspective view of a first configuration of the modular thermal management system of the present disclosure; and
FIG. 8 illustrates a perspective view of a second configuration of the modular thermal management system of the of the present disclosure.

### DETAILED DESCRIPTION

The figures discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

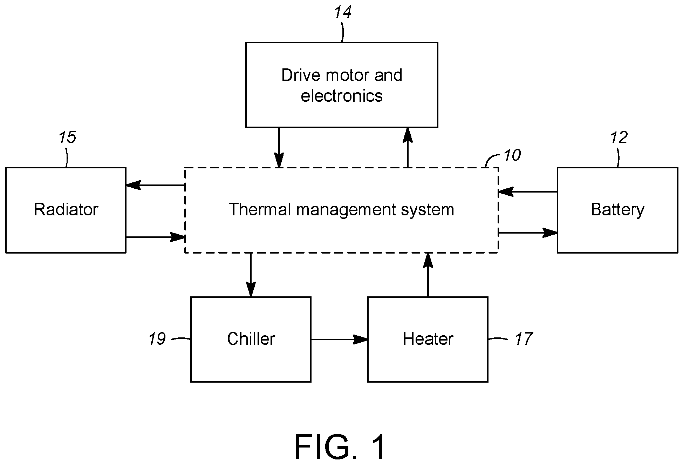

FIG. 1 illustrates a thermal management system 10 used in circulating a fluid, such as a coolant, in a vehicle through one or more coolant circuits to regulate the temperature of the heat generating components of the vehicle. The heat generating components may be a battery 12 for powering a hybrid or an electric vehicle, a drive motor, and its associate drive electronics 14 that drive the wheels of the vehicle. An electric heater may also be connected to the coolant circuits for adding heat to the thermal management system 10, to heat the battery 12 in cold condition before sufficient heating can be provided by the other heat generating components. The coolant circuits carry heat from the heat generating components to heat absorbing components of the vehicle such as, for example, a radiator 15. The system 10 may also include a chiller device 19 that can remove heat from the coolant via absorption refrigeration. As can be appreciated, the thermal management system 10 may also be used in non-vehicle applications.

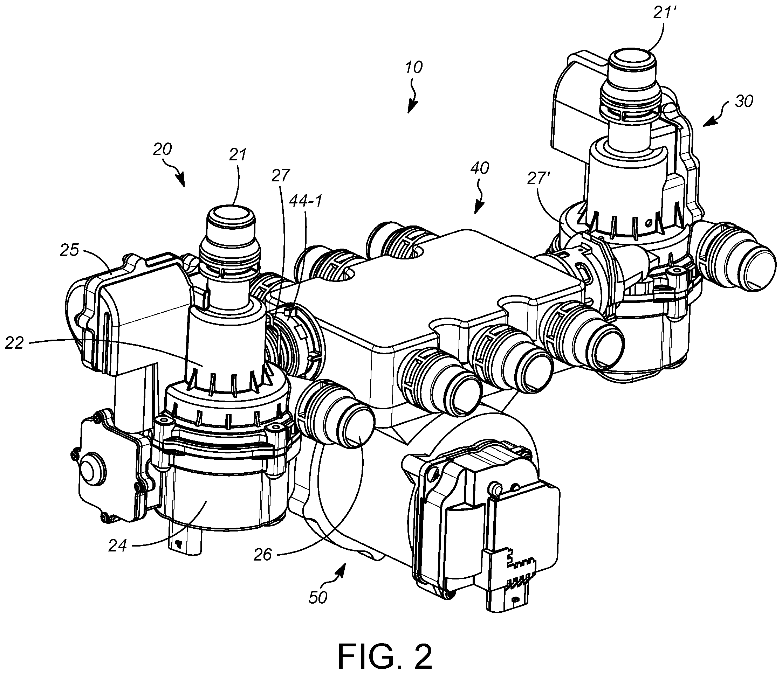

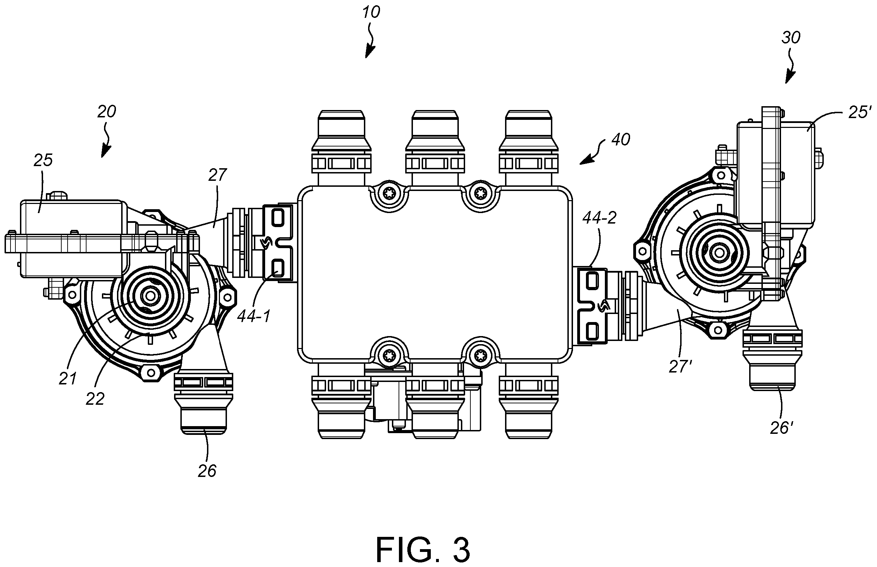

FIG. 2 and FIG. 3 illustrate the modular thermal management system 10 of the present invention. The system 10 is comprised of a first fluid pump 20 with an integrated valve, a second fluid pump 30 with an integrated valve, a fluid transfer manifold 40 and a manifold actuator sub-assembly 50. All the components 20, 30, 40 and 50 are arranged to be connected in a modular assembly located within a central location on the vehicle. It should be noted that fluid pumps without integrated valves that use valves that are separated from the fluid pumps may also be used with the fluid transfer manifold 40.

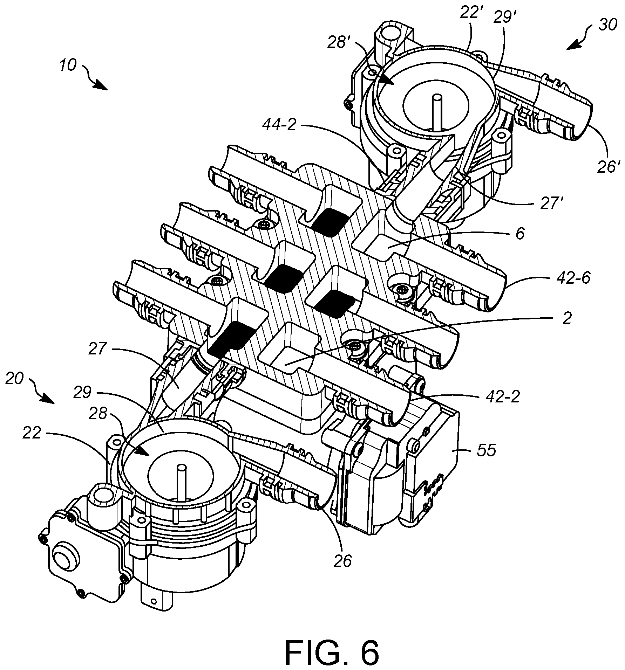

The first fluid pump 20 and the second fluid pump 30 each include an integrated valve built into each pump 20, 30. Such as for instance, the fluid pump with an integrated valve described in U.S. Patent 11,982,279, which is incorporated herein by reference. Each of the first and second fluid pumps 20 and 30 are identical and include the same components and operate in the same manner as the other. First fluid pump 20 will be used to describe both pumps 20 and 30. First fluid pump 20 includes a pump section 22, a motor section 24, and an actuator section 25. A pump inlet 21 extends into the interior of the pump section 22 and into a pump cavity 28 (see FIG. 6). An electric pump motor is housed in the motor section 24. The pump motor, when energized rotates an impeller in the pump cavity 28 that drives coolant entering into the pump cavity 28 from the pump inlet 21. An integrated valve housed within the pump section 22 is movable by an actuator motor housed in the actuator section 25. Activation of the actuator motor selectively switches coolant fluid in the pump cavity 28 either out of the pump a first outlet 26, or a second outlet 27 or from both the first and the second outlets 26, 27 concurrently. For example, fluid entering the first fluid pump 20 from its inlet 21 may be selectively switched out of the pump cavity 28 by the integrated valve through the first outlet 26 or the second outlet 27 or from both outlets 26 and 27.

Since each fluid pump 20 and 30 includes an integrated valve, each fluid pump 20 and 30 can be selectively switched into an operational mode that connects coolant from a heat generating component to a heat absorbing component. For example, inlet 21 of the first fluid pump 20 can be connected to a coolant circuit downstream from the drive motor 14 and its first outlet 26 to the radiator 15. The first fluid pump 20 actuator motor can be operated to selectively place its associated integrated valve into an operational mode that places the first fluid pump 20 valve in a position that connects pump inlet 21 to the first outlet 26 and the radiator 15. Similarly, the pump inlet 21' of the second fluid pump 30 can be connected to a coolant circuit downstream from the battery 12 and the second fluid pump 30 outlet 26' to the radiator heater 17. The second fluid pump 30 actuator motor can be selectively operated into an operational mode that switches the second fluid pump 30 integrated valve into a position that connects the second fluid pump 30 inlet 21' to its first outlet 26'.

The second outlet 27, 27' of each of the first and second fluid pumps 20, 30 respectively, are fluidically connected to fluid inlet ports 44-1 and 44-2 of the fluid transfer manifold 40. Each first and second fluid pumps 20, 30 can be commanded to place their respective integrated valves into an operational mode that causes the coolant in each pump cavity 28 to flow from each of the pumps 20, 30 second outlet 27 into a respective fluid inlet port 44-1, 44-2 and into the fluid transfer manifold 40.

The modular thermal management system 10 is configured to be modular and allow for the ease of fluid connections between pipelines and the components of the system 10. For example, the pump inlets 21, 21' and both fluid outlets of fluid pumps 20 and 30 have end portions configured as VDA (Verband der Automobilindustrie) industry standard male plug-in endforms. The fluid inlet ports 44-1 and 44-2 of the fluid transfer manifold 40 are configured as VDA receptacles that receive the VDA male plug-in endforms. The VDA connectors provide for quick snap-in fluidic connection between components of a fluid system. Such as for example, a tube, a pipe, or a hose, to a device such as a pump, tank, or another tube or between devices. The VDA connectors have a tubular receptacle arranged to receive the plug-in endform within a socket. The plug-in endform makes a snap engagement with the socket to enable a locking relation between the endform and the receptacle. A wire retainer is often used that has a pair of engagement arms that extend through slots in the receptacle to retain the plug-in endform in the receptacle socket. It should be noted however, that other forms of connections, such barbed ends that can receive flexible tubes, can be used to connect the fluid pumps 20 and 30 to coolant circuits pipelines or to the fluid transfer manifold 40.

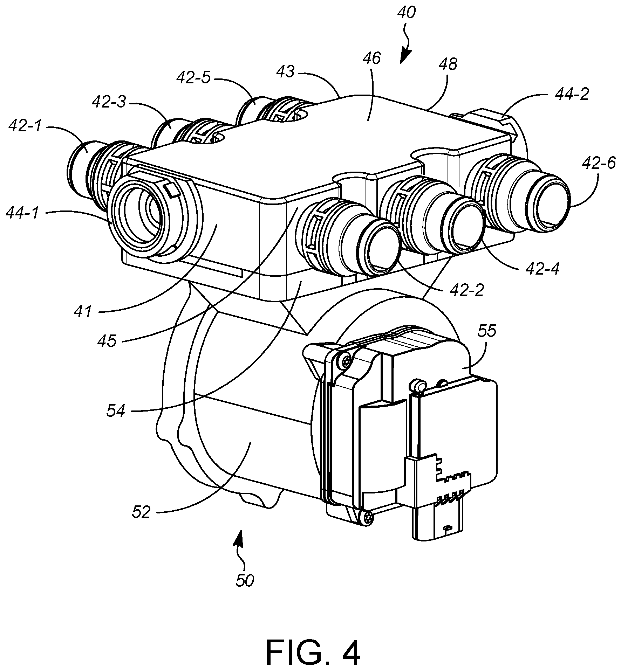

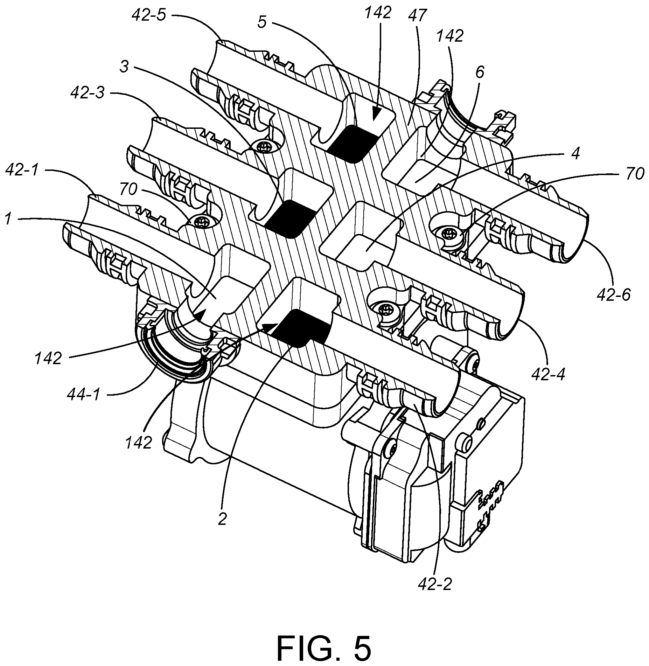

With reference to FIGS. 4 and 5, the fluid transfer manifold 40 and the manifold actuator sub-assembly 50 is shown isolated from the first and second pumps 20 and 30. The fluid transfer manifold 40 shown in FIG. 4 includes 3 fluid ports 42-1, 42-3 and 42-5 extending from an outer wall 43 of the manifold 40 and three more fluid ports 42-2, 42-4 and 42-6 extending from another outer wall 45. Each fluid wall 43 and 45 is located on opposite sides of the other, thereby placing fluid port 42-1, 42-2, 42-3 and 42-2, 42-4 and 42-6 on opposite sides of the manifold 40. Fluid inlet ports 44-1 and 44-2 extend from a third wall 41 and a fourth wall 48 respectively of the manifold 40. Fluid inlet port 44-1 is arranged to be fluidically connected to the first fluid pump second outlet 27 and fluid inlet port 44-2 to the second fluid pump 30 second outlet 27. Fluid inlet ports 44-1 and 44-2 function only as fluid inlet ports to manifold 40 from respective fluid pumps 20 and 30. The exemplary transfer manifold 40 is shown with six fluid ports 42-1 - 42-6 for the ease illustrating the present disclosure. It will be appreciated that the transfer manifold may also contain less than the six and greater than the six fluid ports illustrated.

Each fluid port 42-1 - 42-6 is designed, to be connected to pipelines of one more respective vehicle coolant circuits that convey coolant fluid between the heat producing and heat absorbing components of the vehicle. Additionally, each fluid port 42-1 - 42-6, unlike fluid inlet ports 44-1 and 44-2, can be operated as either an output fluid port carrying fluid out of the manifold 40 or an input fluid port that sends coolant from a coolant circuit into the manifold 40. A top cover 46 is attached to a top end of the fluid transfer manifold 40 forming a ceiling for the manifold 40.

The manifold actuator sub-assembly 50 comprises a valve housing 52 a valve interface 54 and a manifold actuator 55. The valve housing 52 contains a valve mechanism, such as for example a rotary valve. The valve interface 54 is attached to a bottom portion of fluid transfer manifold 40 using suitable threaded fasteners 70. A top surface of the valve interface 54 forms the floor of fluid transfer manifold 40.

Within the valve housing 52 a rotor having a plurality of paddles or vanes is caused to be rotated by an electric actuator motor contained in the actuator housing 55. The actuator motor drives and positions the rotor vanes to selectively cause coolant fluid in the manifold to flow through a plurality of doors 1-6 located in the valve interface 54. A fluid transfer passageway is located within valve housing 52 below the valve interface 54 and doors 1-6. The fluid transfer passageway fluidically connects each door 1-6 to the other. For example, the rotor vanes of the valve mechanism may be positioned to cause doors 1 and 6 to open. Coolant fluid entering door 1 would enter the fluid transfer passageway and emerge from door 6, and/or vice versa. It should be noted that other forms of valving devices may be used to cause coolant fluid flow between doors 1-6 and the transfer fluid through the manifold 40. The use of a rotary valve in this disclosure is only one example of a fluid switching mechanism that can provide flow through and between doors 1-6 of the valve interface 54.

The pump motors and actuator motors for each of the first and second fluid pumps 20, 30 and the actuator motor for the manifold actuator sub-assembly 50 are made to be activated using operational mode commands sent from a vehicle's computer or from a user operational panel (not shown). For example, sensors placed at various locations in the vehicle's coolant circuits including in the fluid transfer manifold 40 may send signals to a vehicle computer system to activate cooling or heating protocols based on the need to heat or cool certain components of the vehicle. The vehicle computer sends operational mode commands to the pump and actuator motors of fluid pumps 20, 30 of the system 10 to activate the pump motors and the integrated valves of each pump 20, 30 and manifold actuator sub-assembly 50 into an operational mode that provide the necessary cooling or heating actions commanded through the system 10.

With renewed reference to FIG. 5, a perspective cross-section through the fluid transfer manifold 40 is shown. Each fluid port 42-1 - 42-6 is fluidically connected by a passage to an individual chamber 142 located in a central interior of the manifold 40, each chamber 142 located next to the other. Each chamber 142 is isolated from a neighboring chamber 142 by perimeter walls such as perimeter walls 47. The top cover 46 when installed on a top portion of the manifold 40 forms the ceiling of the manifold 40. Each chamber 142 sits above an individual door 1, 2, 3, 4, 5 and 6 located along a bottom end portion of each chamber 142. As was explained above, fluid transfer is made from one chamber 142 to another chamber 142 by the action of actuator sub-assembly 50 and the rotary valve selectively opening two or more doors 1-6. With all of the chamber doors 1-6 closed, coolant fluid is prevented from being transferred to the transfer passageway and therefore does not flow between chambers 142. However, with door 1 closed, fluid entering fluid inlet port 44-1 would flow out of fluid port 42-1. Similarly, with door 6 closed fluid entering port 44-2 would flow out of fluid port 42-6.

FIG. 5 illustrates an exemplary operational condition where doors 2, 3 and 5 are closed and doors 1, 4 and 6 are open. In the example of FIG. 5, a coolant circuit is established between the fluid ports 42-1, 42-4 and 42-6, and chambers 142 associated with open doors 1, 4 and 6. The fluid circuit receives coolant fluid inlet port 44-1. Since door 1 is open, coolant fluid pumped from the first fluid pump 20 flows through door 1 and into the fluid transfer passageway and out of doors 4 and 6 and into the chambers 142 associated with fluid ports 42-4 and 42-6. A portion of the coolant fluid applied to inlet port 44-1 would also flow out of fluid port 42-1.

FIG 6. is a perspective section through the modular thermal management system 10 of FIG. 2. FIG. 6 illustrates the modular thermal management system 10 operated in an operational mode where the first fluid pump 20 is operated to pump coolant fluid from inlet 21 and out of the first outlet26. The first fluid pump 20 actuator motor may be commanded to set the pump 20 integrated valve into an operational mode that forms a coolant circuit between the drive motor 14 and the heater 17. In this operational mode fluid enters inlet 21 of the first fluid pump 20 from the drive motor 14. The integrated valve of pump 20 is positioned to place a wall 29 between the fluid cavity 28 and a passage leading to second outlet 27, effectively cutting off the second fluid outlet 27 from the pump cavity 28. The first pump 20 integrated valve, however, opens the pump cavity 28 to the first outlet 26 directing the coolant fluid in the pump cavity 28 into the first outlet 26 and to heater 17.

For the second fluid pump 30, the pump 30 actuator motor may be commanded into an operational mode that positions the integrated valve of pump 30 to block the pump cavity 28' from the first outlet 26' by a placing a wall 29' between the pump cavity 28' from the first outlet 26'. In this operational mode the manifold actuator 55 is commanded to open doors 1 and 6 of the valve mechanism and close doors 2-5. In this exemplary operational mode, coolant fluid in the second pump cavity 28' that enters inlet 21 from the battery 12 exits the second fluid outlet 27' and into fluid inlet port 44-2. The coolant fluid from pump 30 enters the transfer manifold 40 and into the chamber 142 associated with door 6. The coolant fluid flows through open door 6 and into the transfer passageway and exits the transfer passageway at open door 2. A coolant circuit is formed between the inlet 21' of the second fluid pump 30 and the fluid ports 42-6 and 42-2 associated with doors 6 and 2, respectively. The coolant circuit formed by this operational mode may be used to form a coolant circuit between the battery 12 and one or more of the heat absorbing devices such as, for example, the radiator 15.

As explained earlier, any combination of flow circuits between chambers 142 can be made when a door 1-6 is opened by the manifold actuator sub-assembly 50 and its associated valve mechanism. A flow circuit is prevented from being established when any door 1-6 is closed, except for the chambers 142 that are directly connected to fluid inlet ports 44-1 and 44-2. When any door 1-6 is opened, fluid enters into the fluid transfer passageway and is expelled from the associated chamber 142 and a fluid port 42-1 - 42-6 where a door 1-6 is open.

The modular thermal management system 10 is configured to be modular and allow for the ease of connections between pipelines and components of the system 10. For example, all of the fluid ports 42-1 - 42-6 of the fluid transfer manifold 40 are configured as VDA male plug-in endforms. Both the fluid ports 26, 27 of pump 20 and the fluid ports 26', 27' of pump 30 also have end portions that are formed as VDA male plug-in endforms. Fluid inlet ports 44-1 and 44-2 are formed as VDA receptacles.

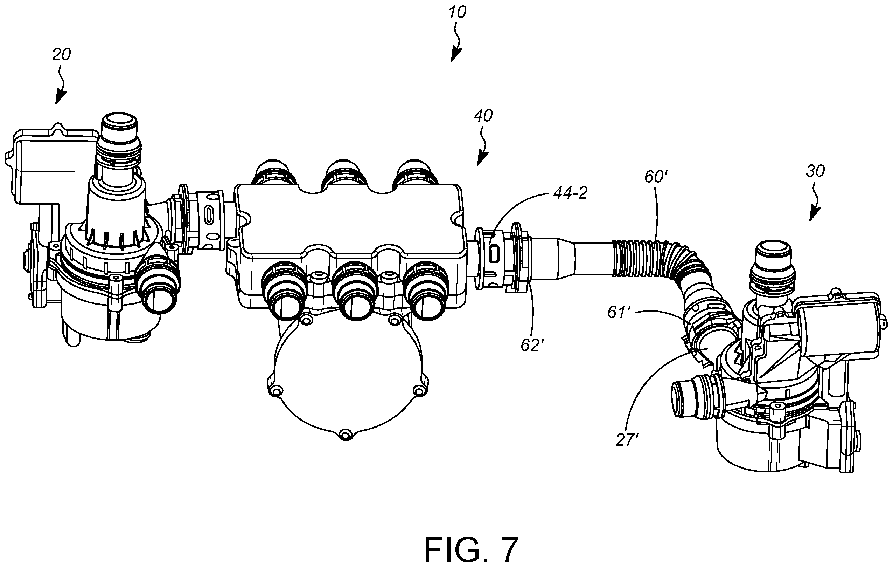

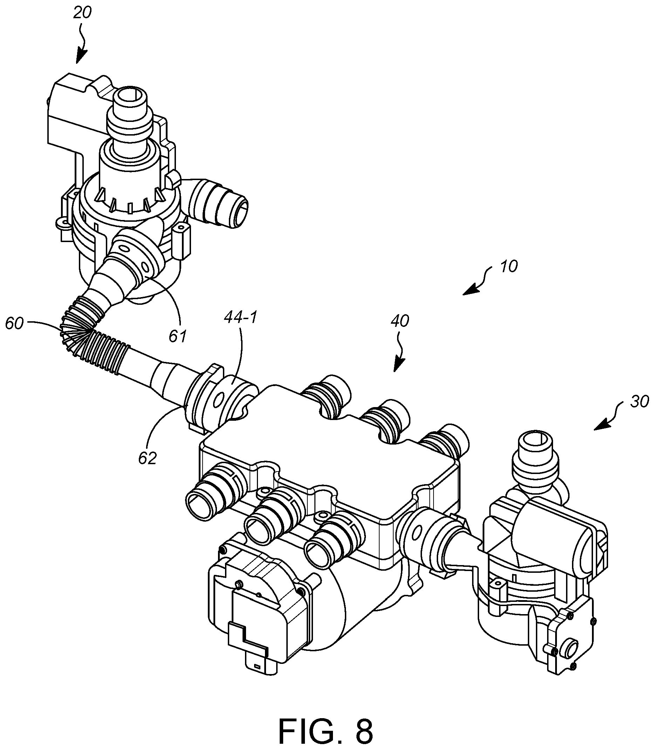

Not all vehicle installations have the space to allow the complete assembly of the system 10 in one location. Using a VDA or any similar quick connector devices, known and used for making fluid connections one or both of the fluid pumps 20 and 30 can be located away from the manifold 40 and connected together via a fluid conduit. For example, in Fig. 7 fluid pump 30 is fluidically connected to the manifold 40 by using a fluid conduct 60. A first end of the fluid conduit 60 includes a quick connector receptacle 61 that receives the second fluid outlet 27' of pump 30. An end portion of the second fluid conduit 27 formed as an end form arranged to be received by the quick connector receptacle 61'. A second end of the conduit 60' has a quick connector plug-in endform 62' fluidically connected to fluid inlet port 44-2 of manifold 40. Fluid inlet port 44-2 configured as a quick connector receptacle. Fig. 8 illustrates an example of the fluid pump 20 fluidically connected to the manifold 40 using a conduit 60. A first end of the conduit 60 includes a quick connector receptacle 61 that receives the male plug-in endform portion of the first fluid outlet 26 of pump 20. A second end of the conduit 60 has a quick connector male endform 62 connected to a quick connector receptacle at fluid inlet port 44-1 of manifold 40.

It may be advantageous to set forth definitions of certain words and phrases used throughout this patent document. The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims is intended to invoke 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," or "controller" within a claim is understood and intended to refer to structures known to those skilled in the relevant art, as further modified or enhanced by the features of the claims themselves and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

### NUMBERED EMBODIMENTS

### Numbered Embodiment 1

A system for circulating coolant comprising:
a fluid transfer manifold having at least a first inlet port and one or more fluid ports, the fluid ports connected to one or more coolant circuits;
a fluid pump connected to a heat generating component and having at least a first outlet connected to the first inlet port;
a valve mechanism located in a valve housing and attached to the fluid transfer manifold and operable to connect the first inlet port to one or more of the fluid ports and circulate coolant from the heat generating component to the one more coolant circuits.

### Numbered Embodiment 2

The system of numbered embodiment 1, wherein the fluid pump includes a second outlet connected to another one of the one or more coolant circuits.

### Numbered Embodiment 3

The system of numbered embodiment 2, wherein the fluid pump includes an integrated valve for selectively connecting the heat generating component to the fluid pump first outlet or the second outlet.

### Numbered Embodiment 4

The system of numbered embodiment 3, wherein the fluid transfer manifold includes a second inlet port connected to another fluid pump, the other fluid pump connected to a second heat generating component.

### Numbered Embodiment 5

The system of numbered embodiment 4, wherein the other fluid pump includes a second outlet connected to another one of the one or more coolant circuits.

### Numbered Embodiment 6

The system of numbered embodiment 5, wherein the other fluid pump includes an integrated valve for selectively connecting the heat generating component to the other fluid pump first outlet or the second outlet.

### Numbered Embodiment 7

The system of numbered embodiment 6, wherein the fluid transfer manifold includes a plurality of fluid chambers, each fluid chamber located in a valve interface and each fluid chamber fluidically connected to a respective one of the fluid transfer manifold fluid ports.

### Numbered Embodiment 8

The system of numbered embodiment 7, wherein the first inlet port is fluidically connected to one of the plurality of fluid chambers.

### Numbered Embodiment 9

The system of numbered embodiment 7, wherein the second inlet port is fluidically connected to one other of the plurality of fluid chambers.

### Numbered Embodiment 10

The system of numbered embodiment 9, wherein the plurality of fluid chambers are each connected to the other by a fluid transfer passageway located in the valve housing.

### Numbered Embodiment 11

The system of numbered embodiment 10, wherein each of the plurality of fluid chambers includes a door located between a respective fluid chamber and the fluid transfer passageway, wherein each door is operable by the valve mechanism to open or close.

### Numbered Embodiment 12

The system of numbered embodiment 11, wherein the valve mechanism is a rotary valve operable by an actuator motor, wherein the actuator motor causes the rotary valve to selectively open or close one or more of the doors.

### Numbered Embodiment 13

The system of numbered embodiment 12, wherein each door when open allows coolant from the heat generating component to be transferred between the fluid transfer passageway the associated fluid chamber and fluid transfer manifold outlet port.

### Numbered Embodiment 14

The system of numbered embodiment 13, wherein each door when closed blocks coolant from the heat generating component to be transferred between the fluid transfer passageway the associated fluid chamber and fluid transfer manifold outlet port.

### Numbered Embodiment 15

A modular thermal management system comprising:
A fluid transfer manifold having a first and a second inlet port and one or more fluid ports fluidically connected to one or more coolant circuits;
a first fluid pump fluidically connected to a first heat generating component having at least a first outlet connected to the fluid transfer manifold first inlet port;
a second fluid pump fluidically connected to a second heat generating component having at least a first outlet connected to the fluid transfer manifold second inlet port; and
a valve mechanism attached to the fluid transfer manifold operable to fluidically connect the first fluid transfer manifold inlet port to one or more of the fluid ports to circulate coolant in one or more coolant circuits from the first heat generating component, and further operable to fluidically connect the second fluid transfer manifold inlet port to one or more of the fluid ports to circulate coolant to one or more coolant circuits from the second heat generating component.

### Numbered Embodiment 16

The system of numbered embodiment 15, wherein the first fluid pump includes a second outlet connected to another one of the one or more coolant circuits.

### Numbered Embodiment 17

The system of numbered embodiment 16, wherein the first fluid pump includes an integrated valve for selectively connecting the heat generating component to the first fluid pump first outlet or the second outlet.

### Numbered Embodiment 18

The system of numbered embodiment 15, wherein the second fluid pump includes a second outlet connected to another one of the one or more coolant circuits.

### Numbered Embodiment 19

The system of numbered embodiment 5, wherein the second fluid pump includes an integrated valve for selectively connecting the heat generating component to the fluid pump first outlet or the second outlet.

### Numbered Embodiment 20

A modular thermal management system comprising:
a first coolant circuit comprising a heat generating component and a first heat absorbing component;
a second coolant circuit comprising at least a second heat absorbing component;
at least a first fluid pump having an inlet connected to the first coolant circuit and the heat generating component and a first and a second outlet, and an integrated valve, the integrated valve switchable into a first position that fluidically connects the first outlet to the first heat absorbing component;
a fluid transfer manifold having one or more fluid ports connected to the second coolant circuit, and a first inlet port fluidically connected to the first fluid pump second outlet, wherein the fluid transfer manifold is fluidically connected to the heat generating component of the first coolant loop when the integrated valve is switched into a second position; and
a valve mechanism attached to the fluid transfer manifold, the valve mechanism switchable to fluidically connect the fluid transfer manifold inlet port to one or more of the fluid ports and fluidically connect the second heat absorbing component to the heat generating component.

## Claims

1. A system for circulating coolant comprising:
a fluid transfer manifold having at least a first inlet port and one or more fluid ports, the fluid ports connected to one or more coolant circuits;
a fluid pump connected to a heat generating component and having at least a first outlet connected to the first inlet port;
a valve mechanism located in a valve housing and attached to the fluid transfer manifold and operable to connect the first inlet port to one or more of the fluid ports and circulate coolant from the heat generating component to the one more coolant circuits.

2. The system of claim 1, wherein the fluid pump includes a second outlet connected to another one of the one or more coolant circuits.

3. The system of claim 2, wherein the fluid pump includes an integrated valve for selectively connecting the heat generating component to the fluid pump first outlet or the second outlet.

4. The system of any preceding claim, wherein the fluid transfer manifold includes a second inlet port connected to another fluid pump, the other fluid pump connected to a second heat generating component.

5. The system of claim 4, wherein the other fluid pump includes a second outlet connected to another one of the one or more coolant circuits.

6. The system of claim 4 or claim 5, wherein the other fluid pump includes an integrated valve for selectively connecting the heat generating component to the other fluid pump first outlet or the second outlet.

7. The system of any preceding claim, wherein the fluid transfer manifold includes a plurality of fluid chambers, each fluid chamber located in a valve interface and each fluid chamber fluidically connected to a respective one of the fluid transfer manifold fluid ports.

8. The system of claim 7, wherein the first inlet port is fluidically connected to one of the plurality of fluid chambers.

9. The system of claim 7, wherein the second inlet port is fluidically connected to one other of the plurality of fluid chambers.

10. The system of claim 9, wherein the plurality of fluid chambers are each connected to the other by a fluid transfer passageway located in the valve housing.

11. The system of claim 10, wherein each of the plurality of fluid chambers includes a door located between a respective fluid chamber and the fluid transfer passageway, wherein each door is operable by the valve mechanism to open or close.

12. The system of any preceding claim, wherein the valve mechanism is a rotary valve operable by an actuator motor, wherein the actuator motor causes the rotary valve to selectively open or close one or more of the doors.

13. The system of claim 12, wherein each door when open allows coolant from the heat generating component to be transferred between the fluid transfer passageway the associated fluid chamber and fluid transfer manifold outlet port.

14. The system of claim 13, wherein each door when closed blocks coolant from the heat generating component to be transferred between the fluid transfer passageway the associated fluid chamber and fluid transfer manifold outlet port.

15. A modular thermal management system comprising:
a first coolant circuit comprising a heat generating component and a first heat absorbing component;
a second coolant circuit comprising at least a second heat absorbing component;
at least a first fluid pump having an inlet connected to the first coolant circuit and the heat generating component and a first and a second outlet and an integrated valve, the integrated valve switchable into a first position that fluidically connects the first outlet to the first heat absorbing component;
a fluid transfer manifold having one or more fluid ports connected to the second coolant circuit, and a first inlet port fluidically connected to the first fluid pump second outlet, wherein the fluid transfer manifold is fluidically connected to the heat generating component of the first coolant loop when the integrated valve is switched into a second position; and
a valve mechanism attached to the fluid transfer manifold, the valve mechanism switchable to fluidically connect the fluid transfer manifold inlet port to one or more of the fluid ports and fluidically connect the second heat absorbing component to the heat generating component.
